**Europäisches Patentamt**

**European Patent Office**

**Office européen des brevets**

(19)

(11) Numéro de publication: **0 027 212**
**B1**

(12)

# FASCICULE DE BREVET EUROPEEN

(45) Date de publication du fascicule du brevet: **19.10.83**

(51) Int. Cl.³: **B 29 F 1/06**

(21) Numéro de dépôt: **80105965.0**

(22) Date de dépôt: **02.10.80**

(54) Dispositif de réglage automatique du dispositif de déplacement et de verrouillage d'un dispositif de moulage.

(30) Priorité: **10.10.79 FR 7925727**

(43) Date de publication de la demande:
**22.04.81 Bulletin 81/16**

(45) Mention de la délivrance du brevet:
**19.10.83 Bulletin 83/42**

(84) Etats contractants désignés:
**BE CH DE GB IT LI NL**

(56) Documents cités:
**FR - A - 1 493 473**
**FR - A - 2 084 955**
**FR - A - 2 302 187**
**US - A - 3 345 691**

(73) Titulaire: **PONT-A-MOUSSON S.A.**
**91, Avenue de la Libération**
**F-54017 Nancy (FR)**

(72) Inventeur: **Laurent, Jean**
**12 rue Saint Exupéry**
**F-01100 Oyonnax (FR)**
Inventeur: **Monnet, Bernard**
**rue du Mont Olivet**
**F-01810 Bellignat (FR)**
Inventeur: **Pertuis, Philippe**
**75 cours de Verdun**
**F-01100 Oyonnax (FR)**

(74) Mandataire: **Guy, Claude et al,**
**c/o Centre de Recherches de Pont-à-Mousson BP 28**
**F-54700 Pont-à-Mousson (FR)**

Courier Press, Leamington Spa, England.

Dispositif de réglage automatique du dispositif de déplacement
et de verrouillage d'un dispositif de moulage

La présente invention est relative à un dispositif de réglage automatique du dispositif de déplacement et de verrouillage d'un dispositif de moulage et, en particulier, d'un dispositif de moulage par injection de matières plastiques, élastomères ou autres matières analogues.

Les dispositifs de moulage par injection sont, généralement, du type comprenant un plateau fixe et un plateau mobile portant respectivement les deux moitiés d'un moule, un second plateau fixe ou sommier, solidarisé au plateau fixe porte-moule, et un dispositif de déplacement et de verrouillage du demi-moule mobile contre le demi-moule fixe. Le dispositif de déplacement et de verrouillage est, souvent, formé d'un vérin de verrouillage à grand effort et faible course et solidaire du sommier, et d'un second plateau mobile ou plateau porte-embiellage, lui-même relié au plateau mobile porte-demi-moule par deux bielles articulées, formant dispositif à genouillère, commandé par un vérin de déplacement à faible effort et à grande course, dans ce type de dispositif de déplacement et de verrouillage, le déplacement du demi-moule mobile vers le demi-moule fixe est réalisé par le dispositif à genouillère tandis que le vérin de verrouillage assure la mise sous pression des deux demi-moules lors de l'injection et le décollement des deux demi-moules après injection de la matière à mouler.

Lors du changement de moules dans ces dispositifs de moulage, l'épaisseur des moules varie généralement et il est nécessaire d'effectuer des réglages de la course du vérin de verrouillage afin que, lorsque les deux demi-moules sont approchés par le dispositif à genouillère, il ne subsiste qu'un faible espace entre les deux demi-moules. En effet, cet espace doit être suffisamment grand pour que l'alignement des bielles du dispositif à genouillère puisse s'effectuer correctement lors de la fermeture du moule mais, toutefois, cet espace doit être assez faible pour que, d'une part, aucun objet étranger ne puisse s'interposer entre ces deux demi-moules et que, d'autre part, la course du vérin de verrouillage soit aussi faible que possible. Ces deux conditions sont nécessaires car, d'une part, les bielles doivent être alignées pour que l'effort de verrouillage soit appliqué correctement aux demi-moules, d'autre part, la course du vérin de verrouillage doit être ausi faible que possible pour permettre une mise sous pression rapide de ce vérin et, d'autre part, l'effort créé par ce vérin de verrouillage étant important, si un objet étranger s'était interposé entre les deux demi-moules, cet objet sous cet effort important pourrait provoquer une destruction ou une déformation du moule.

Par le brevet FR—A—1493473, il est connu de limiter la course du vérin de fermeture, dans le sens du recul, par une butée réglable constituée par une tige vissée engagée dans le fond du cylindre du vérin.

De même, par le brevet FR—A—2302187, il est connu de limiter la course du vérin de fermeture, dans le sens du recul, en déplaçant un piston formant, fond du vérin de fermeture, ce déplacement pouvant être hydraulique.

Par ces dispositifs connus, il est nécessaire qu'à chaque changement d'épaisseur de moules, un opérateur assure le réglage de la butée ou du piston formant fond du vérin de fermeture, ce qui est toujours long à réaliser.

La présente invention a pour but de supprimer ces réglages manuels et a pour objet un dispositif automatique de réglage du dispositif de déplacement et de verrouillage d'un dispositif de moulage, ce dispositif de moulage comprenant, sur un châssis, entre un plateau fixe ou sommier et un second plateau fixe, porte demi-moule fixe, deux plateaux mobiles déplaçables parallèlement aux plateaux fixes, l'un, par au moins un vérin de verrouillage porté par le premier plateau fixe, et l'autre, portant le demi-moule mobile, par un dispositif de déplacement porté par le second plateau mobile. Ce dispositif de réglage de la course du vérin de verrouillage, prévu pour permettre le verrouillage de moules d'épaisseurs différentes, et caractérisé en ce qu'il comporte, portés par le second plateau mobile, deux contacteurs de commande du vérin de verrouillage, ces deux contacteurs se faisant face et étant situés de part et d'autre d'un dispositif de commande de ces contacteurs, pouvant coulisser avec le second plateau mobile lorsque l'effort exercé par celui-ci est supérieur à l'effort de frottement, exercé lors du coulissement par le dispositif de fixation sur le châssis du dispositif de commande.

Grâce à ce dispositif, le réglage de la commande du vérin de verrouillage est obtenu automatiquement, lors du changement de l'épaisseur d'un moule sans aucun réglage manuel.

D'autres particularités et avantages apparaîtront au cours de la description qui va suivre.

Aux dessins annexés, donnés uniquement à titre d'exemple,

— la Fig. 1 est une vue schématique en élévation d'un dispositif de moulage par injection pourvu d'un dispositif automatique de réglage selon l'invention;

— la Fig. 2 est une vue schématique en élévation, à plus grande échelle que celle de la Fig. 1, d'un dispositif automatique de réglage selon l'invention;

— les Fig. 3 à 6 sont des vues schématiques, à même échelle que la Fig. 2, en diverses positions, d'un dispositif automatique de réglage selon l'invention.

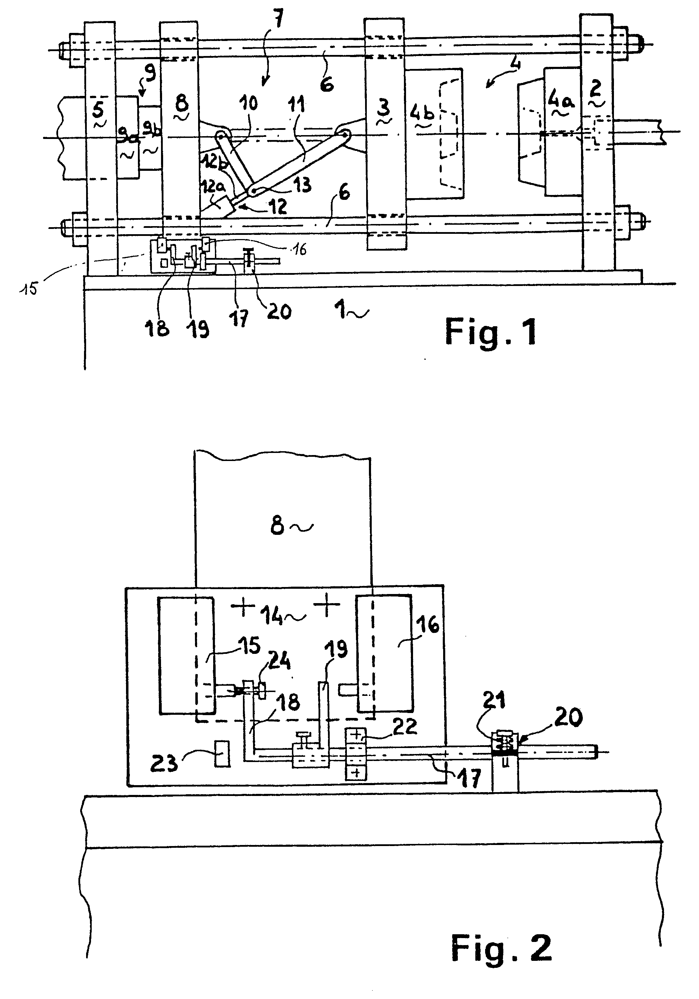

Selon l'exemple représenté à la Fig. 1, le dispositif de réglage selon l'invention est appliqué à un dispositif de moulage par injection comportant, sur un châssis 1, un plateau fixe 2 et un plateau mobile 3, portant respectivement les deux parties 4a—4b d'un moule 4, un plateau fixe ou sommier 5, quatre colonnes 6 horizontales reliant le plateau fixe 2 et le sommier 5 et sur lesquelles coulisse le plateau mobile, et un dispositif 7 de déplacement et de verrouillage du demi-moule mobile 4b contre le demi-moule 4a.

Le dispositif 7 de déplacement et de verrouillage est formé d'un second plateau 8 mobile ou plateau porte-embiellage coulissant sur les quatre colonnes 6 et mû par un vérin 9, à double effet, de verrouillage et de déverrouillage, à cylindre 9a solidaire du sommier 5 et à piston 9b solidaire du plateau porte-embiellage 8, lui-même relié au plateau 3 mobile porte-demi-moule par deux bielles 10—11 formant dispositif à genouillère commandé par un vérin 12 à double effet de déplacement, à cylindre 12a solidaire du plateau port-embiellage et à piston 12b relié à l'axe 13 de jonction des deux bielles 10—11.

Le dispositif de réglage selon la présente invention, représenté aux Fig. 1 à 6, comporte:

— une plaque support 14, fixée sur le côté du plateau 8 porte-embiellage et portant deux contacteurs 15 et 16 de commande du vérin de verrouillage, se faisant face l'un à l'autre; l'un 15 et l'autre 16 étant reliés respectivement aux deux circuits d'alimentation de l'avance et du recul (non représentés) du piston 9b du vérin 9;

— et un dispositif de commande des contacteurs 15—16 formé d'une tige 17 portant deux pattes 18 et 19 perpendiculaires à la tige 17 et destinées à manoeuvrer respectivement mais non simultanément les contacteurs 15 et 16. Cette tige 17 est montée coulissante avec un frottement fort dans une bride 20 à serrage élastique, solidaire du châssis 1. Le serrage élastique des brides est effectué par interposition de rondelles élastiques 21, par exemple de type Belleville. La tige 17 coulisse également dans une pièce 22 portée par la plaque support 14 et formant butée de la patte 19 de la tige 17. Cette butée est située de telle sorte que, lorsque le contacteur 16 est enclenché, la patte 19 vient en appui contre cette butée 22.

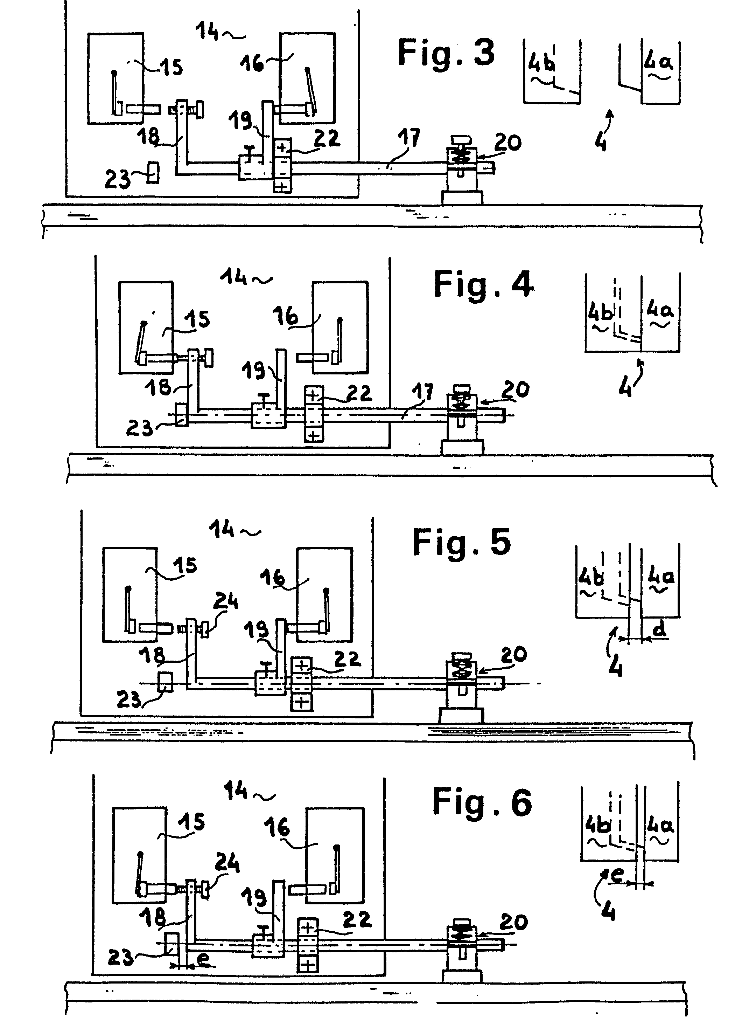

La plaque support 14 porte également une pièce 23 formant butée de la patte 18. Cette butée 23 est située de telle sorte que la patte 18 est distante d'une longueur ou jeu e (Fig. 6) lorsqu'elle enclenche le contacteur 15.

Le fonctionnement du dispositif automatique de réglage du dispositif de déplacement et de verrouillage est le suivant:

Lors du montage d'un moule 4 sur les plateaux 2—3, ceux-ci sont écartés le plus possible par éloignement du plateau 3 par rapport au plateau 2. Cet éloignement maximum est provoqué par recul complet du piston 9b du vérin 9 de verrouillage puis par pliage du dispositif à genouillère 10—11 sous l'effet du recul du piston 12b du vérin 12. Sous l'action du recul du piston 9b du vérin 9, le plateau 8 porte-embiellage recule également (déplacement vers la gauche sur les figures) et entraîne avec lui la plaque support 14 avec ses contacteurs 15—16 et les butées 22—23 de sorte que la butée 22 vient en appui sur la patte 19 portée par la tige 17 et sous l'effet du vérin de verrouillage à grand effort, fait coulisser la tige 17 à frottement dans les brides 20. Cette position est représentée sur la Fig. 3.

Après mise en place des demi-moules 4a et 4b sur respectivement les deux plateaux 2 et 3, on assure le réglage automatique du dispositif de déplacement et de verrouillage en provoquant l'avance du piston 12b du vérin 12 qui amène en alignement les bielles 10 et 11 du dispositif à genouillère 10—11—13. Les bielles étant alignées, on fait avancer le piston 9b du vérin 9 de verrouillage (déplacement vers la droite sur les figures) jusqu'à ce que les deux demi-moules soient en contact l'un de l'autre. Sous l'effet de l'avance du piston 9b, le porte-embiellage 8 avance également provoquant, avec lui, le déplacement, vers la droite sur les figures, de la plaque support 14 avec ses contacteurs 15—26 et les butées 22—23. Sous l'effet de cette avance, le contacteur 15 est enclenché par appui de la patte 18 et la butée 23 vient pousser sur la tige 17 provoquant, grâce à l'effort important du vérin 9 de verrouillage, l'avance (déplacement vers la droite) de la tige 17 dans la bride 20 à serrage élastique (position représentée à la Fig. 4).

Le moule étant alors fermé, le réglage du dispositif de déplacement et de verrouillage est terminé et tient compte de l'épaisseur du moule 4 porté sur les plateaux 2 et 3. A partir de ce moment-là, la machine reprend son cycle normal de fabrication.

C'est ainsi qu'après injection de la matière dans le moule fermé et fabrication de l'objet moulé, le piston 9b est reculé (déplacement vers la gauche sur les figures) d'une quantité d nécessaire au décollement de l'objet du moule. Lors de ce recul, le plateau 8 porte-embiellage recule également de la même quantité d entraînant avec lui les contacteurs 15 et 16 de sorte que l'enclenchement du contacteur 15 est supprimé alors que le contacteur 16 vient d'enclencher sur la patter 19 qui arrête alors le recul du piston 9b (position représentée à la Fig. 5).

Pour dégager l'objet fabriqué de son moule, il suffit de faire reculer le plateau 3 par pliage du dispositif à genouillère 10—11—13 sous l'effet de recul du piston 12b du vérin 12. Le moule est donc ouvert et libère la pièce fabriquée.

Pour réaliser la fabrication d'un nouvel objet avec le même moule, on assure la fermeture du moule de la manière suivante:

Le dispositif à genouillère 10—11—13 est mû par le vérin 12 pour assurer l'alignement des bielles (position représentée sur la Fig. 6). Dans cette position, l'espace entre les moules est très faible et égal au jeu e. Les bielles étant alignées, le vérin 9 de verrouillage est alors mis sous pression d'avance de telle sorte que les deux demi-moules viennent s'appuyer l'un contre l'autre et que sous l'effet de l'avance du porte-embiellage 8 et de son support 14 la butée 23 vienne s'appliquer sur l'extrémité de la tige 17 mais sans la déplacer puisque cette position correspond à la position de fermeture du moule lors du montage de celui-ci (position représentée à la Fig. 3).

Grâce à ce dispositif automatique de réglage du dispositif de déplacement et de verrouillage, il n'est plus nécessaire d'effectuer des réglages manuels lors du changement de moules et en particulier lorsque le moule change d'épaisseur. En·effet, lors du montage du moule, le positionnement de la tige par rapport au châssis est effectué en fonction de l'épaisseur du moule et ne peut se dérégler au cours du cycle de fabrication puisque le déplacement de la tige 17 par rapport au châssis est freiné par la bride 20 à serrage élastique qui empêche tout coulissement de la tige 17 sous l'effet des efforts créés par les contacteurs 15 et 16. De plus, le déplacement de cette tige 17 n'est effectué que sous l'action des butées 22 et 23 dont le déplacement est provoqué par le vérin de verrouillage 9. La présence de ces·butées 22 et 23 permet d'assurer le déplacement de la tige 17 sans destruction des contacteurs 15 et 16.

Le recul du piston 9b du vérin 9, en fin d'injection de la matière, pour assurer le décollement du demi-moule mobile 4b par rapport au demi-moule mobile 4a peut être modifié en déplaçant la patte 19 portée par la tige 17 par rapport à la patte 18. C'est ainsi que, si l'on approche la patte 19 de la patte 18, la distance de décollement d est augmentée tandis que, si l'on éloigne la patte 19 de la patte 18, ce décollement d est diminué.

En variante de l'invention, il est possible de régler le jeu e destiné à autoriser l'alignement des biellettes lors de la fermeture du moule en· modifiant l'appui de la patte 18 sur le contacteur 15 à l'aide d'une vis 24 portée sur la patte 18 et destinée à s'appliquer sur le contacteur 15.

Alors que dans l'exemple décrit le dispositif de serrage à frottement de la·tige 17 est un dispositif à bride 20 dont le serrage est rendu élastique par des rondelles de type Belleville, il est possible de remplacer ce dispositif par tout autre dispositif empêchant le coulissement de la tige 17 sous l'action des contacteurs mais autorisant le coulissement de cette tige sous l'action des butées 22 ou 23 provoquée par le vérin de verrouillage 9.

La présente invention, bien que décrite ci-dessus pour un dispositif de déplacement à genouillère, peut s'appliquer à tout autre dispositif de transmission de l'effort de verrouillage au plateau mobile tel que par exemple à disque tournant porté par le second plateau 8 et tiges d'appui portées par le plateau mobile 3 et venant sur le disque tournant.

Alors que dans l'exemple décrit le dispositif de réglage a été appliqué à un dispositif de moulage par injection à colonnes, ce dispositif de réglage pourrait être appliqué à tout autre dispositif de moulage comportant un dispositif de déplacement situé entre le plateau porte-moule et un dispositif de verrouillage solidaire d'un plateau fixe.

## Revendications

1. Dispositif automatique de réglage du dispositif de déplacement et de verrouillage d'un dispositif de moulage, ce dispositif de moulage comprenant, sur un châssis (1), entre un plateau fixe ou sommier (5) et un second plateau fixe (2) porte-demi-moule fixe (4a), deux plateaux mobiles (8 et 3) déplaçables parallèlement aux plateaux fixes (5 et 2), l'un (8) par au moins un vérin de verrouillage porté par le premier plateau fixe (5), et l'autre (3) portant le demi-moule mobile (4b) par un dispositif de déplacement porté par le second plateau mobile (8), ce dispositif de réglage de la course du vérin de verrouillage, prévu pour permettre le verrouillage de moules d'épaisseurs différentes est caractérisé en ce qu'il comporte, portés par le second plateau mobile (8), deux contacteurs (15—16) de commande du vérin de verrouillage, ces deux contacteurs (15—16) se faisant face et étant situés de part et d'autre d'un dispositif de commande des contacteurs pouvant coulisser avec le second plateau mobile (8) lorsque l'effort exercé par celui-ci est supérieur à l'effort de frottement exercé, lors du coulissement par le dispositif de fixation (20) sur le châssis (1) du dispositif de commande.

2. Dispositif automatique de réglage selon la revendication 1 caractérisé en ce qu'à chaque contacteur (15—16) correspond une butée (23—22) de déplacement du dispositif de commande des contacteurs.

3. Dispositif automatique de réglage selon l'une des revendications 1 ou 2 caractérisé en ce que le dispositif de commande des contacteurs est formé d'une tige (17) portant deux pattes perpendiculaires (18 et 19) de commande des contacteurs (15—16).

4. Dispositif automatique de réglage selon la revendication 3 caractérisé en ce que la tige (17) est fixée au châssis (1) à l'aide d'une bride (20) à serrage élastique.

5. Dispositif automatique de réglage selon l'une des revendications 3 ou 4 caractérisé en ce que la patte (18) de la tige (17) porte une vis de réglage (24).

6. Dispositif automatique de réglage selon l'une quelconque des revendications 3 à 5 caractérisé en ce que la distance des pattes (18—19) est réglable.

7. Dispositif automatique de réglage selon l'une quelconque des revendications 1 à 6 caractérisé en ce qu'il est appliqué à un dispositif de déplacement à genouillère formé de deux bielles (10—11—13) articulées reliées d'une part au second plateau (8) et d'autre part au plateau mobile (3), un vérin (12) de manoeuvre du dispositif à genouillère étant porté par le second plateau.

## Patentansprüche

1. Vorrichtung zum automatischen Einstellen der Verschiebungs- und Verriegelungsvorrichtung einer Gießvorrichtung, die auf einem Gestell (1) zwischen einer feststehenden Platte oder einem Träger (5) und einer eine feststehende Gießformhälfte tragenden feststehenden zweiten Platte (2) zwei bewegliche Platten (8 und 3) aufweist, die zu den feststehenden Platten (5 und 2) parallel verschiebbar sind, und zwar die eine (8) durch wenigstens einen von der feststehenden ersten Platte (5) getragenen Verriegelungsstellzylinder und die die bewegliche Gießformhälfte (4a) tragende andere (3) durch eine von der beweglichen zweiten Platte (8) getragene Verschiebevorrichtung, wobei die Vorrichtung zum Einstellen des Hubs des Verriegelungsstellzylinders zum Verriegeln von Gießformen mit unterschiedlichen Dicken dient und gekennzeichnet ist durch zwei von der beweglichen zweiten Platte (8) getragenen Schalter (15—16) zur Steuerung des Verriegelungsstellzylinders, wobei die beiden Schalter (15—16) einander zugewandt und beiderseits einer Vorrichtung zur Steuerung der Schalter angeordnet sind, die zusammen mit der beweglichen zweiten Platte verschiebbar ist, wenn die von ihre ausgeübte Kraft größer als die Reibungskraft ist, die während der Verschiebung durch die Befestigungsvorrichtung (20) auf das Gestell (1) der Steuervorrichtung ausgeübt wird.

2. Automatische Einstellvorrichtung nach Anspruch 1, dadurch gekennzeichnet, daß jedem Schalter (15—16) ein Anschlag (23—22) für die Verschiebung der Steuervorrichtung der Schalter entspricht.

3. Automatische Einstellvorrichtung nach einem der Ansprüche 1 oder 2, dadurch gekennzeichnet, daß die Vorrichtung zur Steuerung der Schalter durch eine Stange (17) gebildet ist, die zwei senkrechte Schenkel (18 und 19) zur Steuerung der Schalter (15—16) trägt.

4. Automatische Einstellvorrichtung nach Anspruch 3, dadurch gekennzeichnet, daß die Stange (17) mittels einer elastisch klemmenden Schelle (20) am Gestell (1) befestigt ist.

5. Automatische Einstellvorrichtung nach einem der Ansprüche 3 oder 4, dadurch gekennzeichnet, daß der Schenkel (18) der Stange (17) eine Einstellschraube (27) trägt.

6. Automatische Einstellvorrichtung nach einem der Ansprüche 3 bis 5, dadurch gekennzeichnet, daß der Abstand der Schenkel (18—19) einstellbar ist.

7. Automatische Einstellvorrichtung nach einem der Ansprüche 1 bis 6, dadurch gekennzeichnet, daß sie bei einer gelenkig verbundenen Kniehebel-Verschiebevorrichtung (10—11—13) angewendet ist, die durch zwei Stangen gebildet ist, die einerseits mit der zweiten Platte (8) und andererseits mit der beweglichen Platte (3) verbunden sind, wobei ein Stellzylinder (12) zur Betätigung der Kniehebel-Verschiebevorrichtung von der zweiten Platte getragen wird.

## Claims

1. Automatic device for regulating the device for moving and locking a moulding device, this moulding device comprising, on a frame (1), between a fixed plate or bearer (5) and a second fixed plate (2) supporting a fixed half-mould (4a), two movable plates (8 and 3), which are able to move parellel to the fixed plates (5 and 2), one plate (8) being able to be moved by at least one locking jack supported by the first fixed plate (5) and the other plate (3) supporting the movable half-mould (4b) being able to move by a displacement device supported by the second movable plate (8), this device for regulating the travel of the locking jack, provided in order to allow locking of moulds of different thicknesses is characterised in that it comprises, supported by the second movable plate (8), two contactors (15—16) for controlling the locking jack, these two contactors (15—16) being in facing relationship and being situated on either side of a device for controlling contactors, which is able to slide with the second movable plate (8) when the force exerted by the latter is greater than the frictional force exerted, at the time of sliding by the device (20) for fixing the control device to the frame (1).

2. Automatic regulating device according to claim 1, characterised in that corresponding to each contactor (15—16) is a stop (23—22) for the movement of the device for controlling the contactors.

3. Automatic regulating device according to one of claims 1 or 2, characterised in that the control device for the contactors is formed by a rod (17) supporting two perpendicular lugs (18 and 19) for controlling the contactors (15—16).

4. Automatic regulating device according to claim 3, characterised in that the rod (17) is fixed to the frame (1) by means of a flange (20) with resilient clamping.

5. Automatic regulating device according to one of claims 3 or 4, characterised in that the lug (18) of the rod (17) supports a regulating screw (24).

6. Automatic regulating device according to one of claims 3 to 5, characterised in that the distance between the lugs (18—19) is adjustable.

7. Automatic regulating device according to one of claims 1 to 6, characterised in that it is applied to a displacement device comprising a knuckle-joint formed by two pivoted connecting rods (10—11—13) connected at one end to the second plate (8) and at the other end to the movable plate (3), a jack (12) for operating the device comprising a knuckle-joint being supported by the second plate.

Fig. 1

Fig. 2

0 027 212

Fig. 3

Fig. 4

Fig. 5

Fig. 6